# FASCICULE DE BREVET EUROPEEN

(11) **EP 0 890 958 B1**
(45) Date de publication et mention de la délivrance du brevet: **02.10.2002**
(21) Numéro de dépôt: 98401728.5
(22) Date de dépôt: 08.07.1998
(51) Int. Cl.: G21C 3/322, G21C 3/356

(54) **Plaquettes de grille pour assemblage combustible nucleaire et grille comportant de telles plaquettes**
Gitterstreifen für Kernbrennstabbündel und mit derartigen Streifen versehenes Gitter
Grid blade for nuclear fuel assembly and grid provided with such blades

(30) Priorité: 11.07.1997 FR 9708874
(43) Date de publication de la demande: 13.01.1999
(73) Titulaire: Framatome ANP, 92400 Courbevoie (FR)
(72) Inventeur: Petit, Bernard, 69530 Brignais (FR)
(74) Mandataire: Jacobson, Claude

(56) Documents cités:
- EP-A- 0 273 183
- EP-A- 0 304 724
- WO-A-92/12046
- FR-A- 2 191 209
- US-A- 4 923 669

## Description

L'invention concerne les grilles de maintien des crayons d'un assemblage combustible nucléaire, et notamment celles utilisées dans les réacteurs à eau sous pression et destinées à maintenir les crayons aux noeuds d'un réseau régulier, généralement carré.

Elle concerne notamment la constitution des plaquettes qui sont assemblées entre elles, généralement à mi-fer, pour constituer les grilles.

Les grilles d'un assemblage délimitent des cellules courantes recevant des crayons et d'autres cellules qui sont traversées par des tubes guides, souvent soudés aux grilles. Classiquement, dans les grilles servant au maintien longitudinal des crayons, des bossettes rigides d'appui des crayons sont ménagées dans deux des quatre faces d'une cellule courante de réception de crayon et deux ressorts de maintien découpés ou rapportés sur les deux autres faces pressent le crayon contre les bossettes. Entre les grilles destinées à maintenir les crayons de combustible aux noeuds d'un réseau régulier peuvent être intercalées des grilles munies d'ailettes, n'ayant pour but que d'améliorer le mélange des filets de réfrigérant en écoulement le long de l'assemblage.

Il est important de réduire la perte de charge provoquée par la présence des grilles. Pour cela, on a déjà proposé d'arrondir celle des arêtes des plaquettes qui est située à l'amont dans le sens de l'écoulement (EP-A-0 273 183). Mais cette forme convexe provoque des tourbillons qui dissipent l'énergie. L'emploi de chanfreins droits ne résout pas non plus le problème de ces tourbillons.

L'invention vise à fournir une plaquette de grille provoquant une perte de charge réduite, dont la fabrication reste facile. Dans ce but elle propose une plaquette,dont le bord destiné à être placé à l'amont dans le sens de l'écoulement du réfrigérant du réacteur et profilé sur chaque face destinée à border une cellule est caractérisé en ce que le profil est un biseau concave.

Cette constitution augmente la "transparence" des grilles et facilite le passage du réfrigérant dans les cellules, autour des crayons.

Les plaquettes d'une grille destinée au maintien des crayons ont avantageusement la constitution décrite dans la demande de brevet au nom de Framatome et autre déposée le même jour que la présente demande, pour "Grille pour assemblage combustible nucléaire et plaquette pour une telle grille". Ces plaquettes comportent des ressorts de maintien de crayons comportant chacun deux bandes élastiques découpées dans la paroi plane de la plaquette et d'une seule pièce avec elle, dont chacune s'étend dans le sens transversal à la plaquette et est reliée à la plaquette à ses deux extrémités, les bandes étant en saillie vers l'intérieur de la cellule concernée, au moins à l'état libre, et étant reliées en leur milieu par un pontet transversal, en saillie par rapport aux deux bandes. Ces ressorts sont destinés à appuyer les crayons contre des bossettes, également en forme de pontet. Dans ce cas, il est avantageux de prévoir des biseaux droits à l'amont des bossettes d'appui et/ou des pontets.

Les biseaux concaves à l'amont des plaquettes peuvent avoir des formes diverses. Ils peuvent être de longueur constante. Ils peuvent avoir une longueur qui varie d'un maximum à mi-distance entre les fentes à une valeur minimum à proximité des fentes. Le bord amont de la plaquette peut être limité par une arête qui est concave entre chaque paire de fentes. En général, sur une plaquette munie de bossages, la longueur du biseau est inférieure à la distance entre l'arête inférieure de la plaquette et le bossage le plus proche. Toutefois le biseau peut s'étendre sur toute la plaquette, de l'arête amont à l'arête aval.

Pour éviter la fragilisation du bord amont, la plaquette doit conserver une certaine épaisseur le long de l'arête amont ; toutefois l'épaisseur est de préférence au plus égale à la moitié environ de l'épaisseur dans la partie courante de la plaquette pour que l'effet des biseaux soit notable.

Les caractéristiques ci-dessus, avantageusement utilisables en combinaison mais pouvant l'être séparément, ainsi que d'autres, apparaîtront mieux à la lecture de la description qui suit de modes particuliers de réalisations, donnés à titre d'exemples non limitatifs. La description se réfère aux dessins qui l'accompagnent, dans lesquels :
- la figure 1 est une vue en perspective d'une fraction de plaquette munie de ressorts et de bossages, à laquelle est applicable l'invention ;
- la figure 2 est une vue de détail en coupe suivant la ligne II-II de la figure 1, l'échelle n'étant pas respectée ;
- les figures 3 et 4 sont des vues en perspective montrant des variantes de réalisation de la figure 1 ;
- la figure 5 est une vue en coupe suivant la ligne V-V de la figure 1.

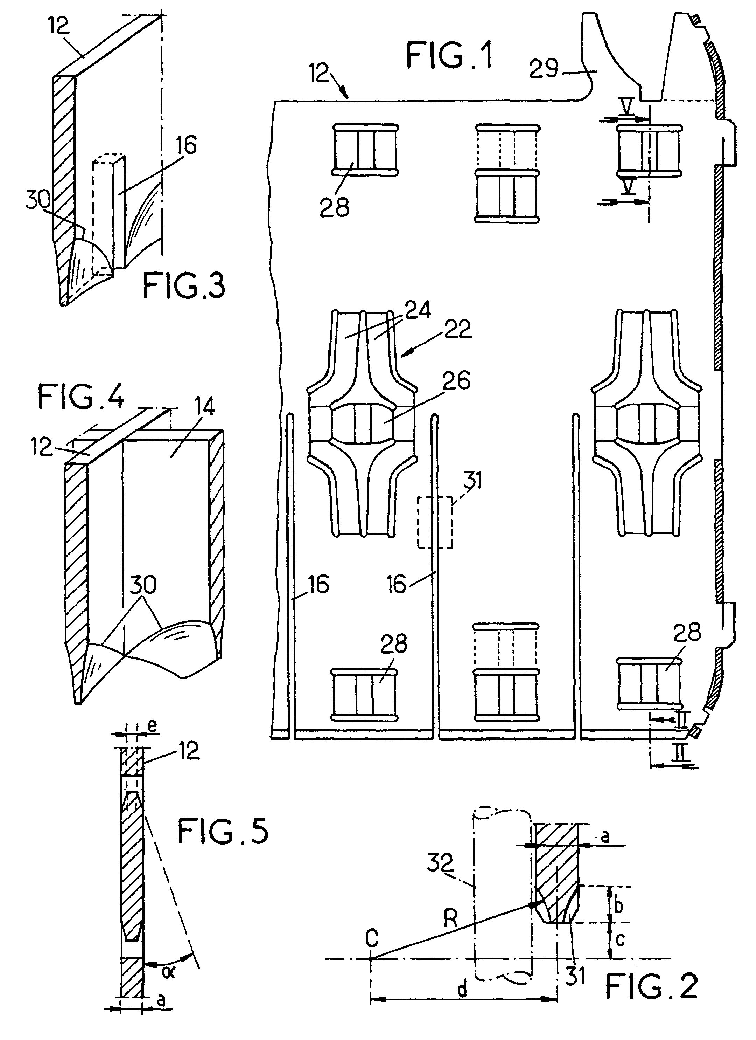

La plaquette 12 montrée partiellement en figure 1 a une constitution générale très similaire à celle décrite dans la demande de brevet français mentionnée plus haut. Elle présente des encoches 16 destinées à l'assemblage avec des plaquettes d'un second jeu. Chaque zone située entre deux encoches et destinée à séparer deux cellules pour des crayons portent des ressorts 22 et des bossages d'appui 28. Chaque ressort est constitué de deux bandes élastiques 24 découpées dans la plaquette, reliées en leur milieu par un pontet transversal 26.

Chacun des ressorts 22 est encadré, dans le sens de l'écoulement, par deux bossages 28, eux aussi en forme de pontet. Les pontets 26 et les bossages 28 peuvent avoir la même forme.

L'arête de la plaquette qui sera située à l'aval dans le sens de l'écoulement, une fois placée dans une grille, peut porter des ailettes de mélange 29.

Pour augmenter la transparence d'une grille constituée de plaquettes entrecroisées, des biseaux de forme concave sont ménagés, au moins à proximité de l'arête amont de la plaquette. En général l'écoulement dans un réacteur à eau sous pression est ascendant et l'arête amont est constituée par l'arête inférieure. Les figures 1 et 2 montrent des biseaux 31 réalisables de façon relativement simple et ne provoquant pas une fragilisation excessive de l'arête. Le chanfreinage de chaque face s'étend sur une distance b légèrement inférieure à l'épaisseur a de la plaquette. Dans le cas d'une grille constituée de plaquettes en alliage de zirconium dit Zircaloy 4, ayant une épaisseur a = 0,425 mm, la longueur b peut être de 0,35 mm.

L'arête amont ne doit pas être trop amincie, pour éviter de fragiliser les bords et de risquer des indentations en cas de choc. Mais les biseaux doivent être suffisamment importants pour augmenter de façon sensible la transparence de la grille. Dans la pratique, on adoptera une épaisseur le long de l'arête proche de la moitié de l'épaisseur courante a.

Bien que divers profils concaves puissent être utilisés pour le biseau, il est avantageux d'adopter une forme de secteur circulaire ayant un centre situé au-delà de la face amont d'une grille constituée de plaquettes suivant l'invention. On peut notamment utiliser une forme cylindrique de rayon R et de centre C situé à une distance c au-dessous du bord amont de la plaquette, du même ordre que b et à une distance d de l'axe de la plaquette égal à plusieurs fois a. Dans la pratique on a obtenu de bons résultats, dans le cas d'une plaquette d'épaisseur a = 0,425 mm, avec c = 0,3 mm et d = 2,1 mm.

Les biseaux peuvent être prévus soit de part et d'autre des croisements avec les plaquettes orthogonales, soit tout le long de la plaquette. Les plaquettes peuvent être fixées entre elles par des soudures soit sur la face aval, soit en cordon dans les dièdres, soit encore dans des fenêtres telles que 33.

Dans la variante de réalisation montrée en figure 3, où l'échelle n'est pas respectée pour plus de clarté, le biseau présente une hauteur variable. Il est délimité par une ligne 30 qui part de l'arête amont à proximité de chaque fente 16 et atteint une distance maximum à partir de l'arête au milieu de la face d'une cellule. Dans ce cas l'épaisseur de l'arête est minimale au milieu de la paroi d'une cellule et atteint l'épaisseur courante aux points d'entrecroisement avec une autre plaquette.

Dans la variante de réalisation montrée en figure 4, où l'échelle n'est de nouveau pas respectée, chaque biseau sur une plaquette 12 ou 14 est encore limité par une ligne 30 qui part de l'arête de la plaquette aux points de croisement avec deux autres plaquettes. De plus, l'arête amont de la plaquette n'est ni d'épaisseur constante, ni rectiligne. Cette arête amont a une forme courbe, permettant de recentrer les filets de liquide réfrigérant vers les crayons, tels que le crayon 32 montré schématiquement en figure 2.

Pour améliorer encore la transparence d'une grille montré en figure 1, les pontets 26 et les bossages 28 peuvent eux aussi présenter des biseaux. Mais dans ce cas on pourra utiliser des biseaux droits et plans, étant donné leur faible dimension. La figure 5 montre, à titre d'exemple, des chanfreins réalisables sur les arêtes amont et aval d'un pontet, avant déformation de la tôle pour constituer les bossages et les ressorts. Un angle α des biseaux de 20° environ a donné de bons résultats. L'épaisseur e des arêtes peut être celle de l'arête amont de la plaquette, c'est-à-dire par exemple au maximum 0,25 mm pour a = 0,425 mm.

## Revendications

1. Plaquette de grille d'assemblage de combustible nucléaire, dans laquelle sont ménagées, à intervalles réguliers, des encoches (16) d'assemblage avec des plaquettes transversales et, entre certaines au moins des paires d'encoches, des bossages (28) de maintien de crayon dans des cellules, le bord amont de la plaquette étant profilé sur chaque face destinée à border une cellule, **caractérisée en ce que** le profil est un biseau concave.

2. Plaquette de grille selon la revendication 1, **caractérisée en ce que** chaque biseau a une longueur constante dans la direction découlement du réfrigérant du réacteur.

3. Plaquette de grille selon la revendication 1, **caractérisée en ce que** chaque biseau a une longueur dans la direction découlement du réfrigérant du réacteur qui varie d'un maximum à mi-distance entre les encoches (16) à une valeur minimum à proximité des encoches.

4. Plaquette de grille selon la revendication 1 ou 3, **caractérisée en ce que** le bord amont de la plaquette est limité par une arête concave entre chaque paire d'encoches.

5. Plaquette de grille selon la revendication 1, 2 ou 3, **caractérisée en ce que** la longueur (b) du chanfrein est inférieure à la distance entre le bord amont de la plaquette et le bossage (28) le plus proche.

6. Plaquette de grille selon l'une quelconque des revendications 1 à 5, **caractérisée en ce que** l'épaisseur de la plaquette le long du bord amont est au plus égale à la moitié environ de l'épaisseur dans la partie courante de la plaquette.

7. Plaquette de grille selon l'une quelconque des revendications 1 à 6, **caractérisé en ce que** les bossages sont constitués par des pontets présentant des arêtes biseautées.

8. Plaquette de grille selon la revendication 7, **caractérisée en ce que** les arêtes des pontets ont la même épaisseur que le bord amont de la plaquette.

9. Plaquette de grille selon la revendication 1, **caractérisée en ce que** chaque biseau est en forme de secteur circulaire ayant un centre situé au-delà du bord amont, de centre C situé à une distance au-dessous du bord amont de la plaquette, à une distance du même ordre que la hauteur (b) du biseau et à une distance (d) de l'axe de la plaquette égale à plusieurs fois l'épaisseur de la plaquette.

10. Grille constituée de deux jeux de plaquettes (12,14) selon l'une quelconque des revendications précédentes, entrecroisées à mi-fer.

## Patentansprüche

1. Gitterplatte für Kernbrennstabbündel, die in gleichmäßigen Abständen Schlitze (16) für den Zusammenbau mit transversalen Platten aufweist und zwischen wenigstens einigen der Schlitzpaare Höcker (28) zum Festhalten von Brennstäben in Zellen umfasst, wobei der flussaufwärtsseitige Rand der Platte auf jeder Seite, die dazu bestimmt ist, eine Zelle abzugrenzen, profiliert ist,
**dadurch gekennzeichnet, dass** das Profil eine konkave Schräge ist.

2. Gitterplatte nach Anspruch 1, **dadurch gekennzeichnet, dass** jede Schräge eine in der Strömungsrichtung des Reaktorkühlmittels konstante Länge hat.

3. Gitterplatte nach Anspruch 1, **dadurch gekennzeichnet, dass** jede Schräge in der Strömungsrichtung des Reaktorkühlmittels eine Länge hat, die variiert von einem Maximum in der Mitte zwischen den Schlitzen (16) bis zu einem minimalen Wert in der Nähe der Schlitze.

4. Gitterplatte nach einem der Ansprüche 1 oder 3, **dadurch gekennzeichnet, dass** der flussaufwärtsseitige Rand der Platte zwischen jedem Schlitzpaar durch eine konkave Schräge begrenzt wird.

5. Gitterplatte nach Anspruch 1, 2 oder 3, **dadurch gekennzeichnet, dass** die Länge (b) der Fase kleiner ist als der Abstand zwischen dem flussaufwärtsseitigen Rand der Platte und dem nächstgelegenen Höcker (28).

6. Gitterplatte nach einem der Ansprüche 1 bis 5, **dadurch gekennzeichnet, dass** die Dicke der Platte längs des flussaufwärtsseitigen Rands höchsten gleich ungefähr der Hälfte der Dicke in dem gewöhnlichen Teil der Platte ist.

7. Gitterplatte nach einem der Ansprüche 1 bis 6, **dadurch gekennzeichnet, dass** die Höcker durch Brücken gebildet werden, die abgeschrägte Kanten haben.

8. Gitterplatte nach Anspruch 7, **dadurch gekennzeichnet, dass** die Kanten der Brücken dieselbe Dicke haben wie die flussaufwärtsseitige Kante der Platte.

9. Gitterplatte nach Anspruch 1, **dadurch gekennzeichnet, dass** jede Schräge die Form eines Kreissektors hat, dessen Zentrum C sich jenseits des flussaufwärtsseitigen Rands befindet, mit einem Abstand (c) vom flussaufwärtsseitigen Rand der Platte von derselben Größenordnung wie die Höhe (b) der Schräge, und mit einem Abstand (d) von der Achse der Platte, der ein Mehrfaches der Dicke der Platte beträgt.

10. Gitter, gebildet durch zwei Sätze von Platten (12,14) nach einem der vorangehenden Ansprüche, die sich auf halber Höhe kreuzen.

## Claims

1. A nuclear fuel assembly grid blade in which there are provided at regular intervals notches (16) for assembly to transverse blades and, between some at least of the pairs of notches, bosses (28) for holding a rod in cells, the upstream edge of the blade being profiled on each face intended to border a cell, **characterised in that** the profile is a concave bevel.

2. A grid blade according to claim 1 **characterised in that** each bevel is of a constant length in the direction of flow of the coolant of the reactor.

3. A grid blade according to claim 1 **characterised in that** each bevel is of a length in the direction of flow of the coolant of the reactor, which varies from a maximum at mid-distance between the notches (16) to a minimum value in the proximity of the notches.

4. A grid blade according to claim 1 or claim 3 **characterised in that** the upstream edge of the blade is limited by a concave edge between each pair of notches.

5. A grid blade according to claim 1, claim 2 or claim 3 **characterised in that** the length (b) of the chamfer is less than the distance between the upstream edge of the blade and the closest boss (28).

6. A grid blade according to any one of claims 1 to 5 **characterised in that** the thickness of the blade along the upstream edge is at most equal to approximately half of the thickness in the ordinary portion of the blade.

7. A grid blade according to any one of claims 1 to 6 **characterised in that** the bosses are formed by bridge bow portions having bevelled edges.

8. A grid blade according to claim 7 **characterised in that** the edges of the bridge bow portions are of the same thickness as the upstream edge of the blade.

9. A grid blade according to claim 1 **characterised in that** each bevel is in the form of a sector of a circle having a centre disposed beyond the upstream edge, with its centre C at a distance below the upstream edge of the blade, at a distance of the same order as the height (b) of the bevel and at a distance (d) from the axis of the blade that is equal to several times the thickness of the blade.

10. A grid formed by two sets of blades (12, 14) according to any one of the preceding claims which are interlaced in lap-joint relationship.
